# EUROPEAN PATENT APPLICATION

(11) **EP 4 822 061 A1**
(43) Date of publication of application: **14.10.2026**
(21) Application number: 25169450.1
(22) Date of filing: 09.04.2025
(51) Int. Cl.: C25B 11/031, C25B 1/04

(54) **INTEGRATION OF CONFIGURED FLOW CHANNELS IN ELECTRODES OF ELECTROCHEMICAL SYSTEMS AND RELATED METHODS**

(71) Applicant: VITO NV, 2400 Mol (BE)
(72) Inventor: TSEHAYE, Misgina Tilahun, 2400 Mol (BE); MOLENBERGHS, Bart, 2400 Mol (BE); CHEN, Zhiyuan, 2400 Mol (BE); DE SCHEPPER, Wim, 2400 Mol (BE); VAES, Jan, 2400 Mol (BE)
(74) Representative: Arnold & Siedsma

(57) **Abstract**

This document describes a method for enhancing bubble evacuation in electrochemical systems by integrating flow channels into porous electrode materials. These channels are engineered during the manufacturing process using techniques such as phase separation micro molding or sacrificial molds. The flow channels facilitate forced electrolyte flow, improving mass transport and preventing gas bubble accumulation, which can block active catalyst sites. This method also mitigates gas crossover risks, optimizes electrode performance, and contributes to system reliability and longevity. The porous electrode materials with integrated flow channels can be used in electrochemical cells to increase the electrochemical active surface area and are applicable in membrane electrode assemblies and alkaline water electrolyzers.

## Description

### TECHNICAL FIELD

The present disclosure relates to the integration of configured flow channels in electrochemical systems, and more particularly, to methods and systems for improving gas bubble evacuation efficiency in such systems.

### BACKGROUND

Electrochemical systems are pivotal in various industrial applications, including energy storage, chemical synthesis, and environmental remediation. These systems often rely on electrochemical cells, which are devices capable of generating electrical energy from chemical reactions or facilitating chemical reactions through the introduction of electrical energy. A critical component of these cells is the electrode, which plays a significant role in the efficiency and effectiveness of the electrochemical processes.

**.**

There is an increasing adoption of porous nickel electrode materials, such as nickel foam and nickel mesh, driven by the need to maximize the electrochemical active surface area, which is crucial for enhancing the performance of electrochemical reactions.

One of the challenges associated with the use of porous electrodes is the entrapment of gas bubbles that form during electrochemical reactions. These bubbles can obstruct the active sites on the electrode, impeding the reaction process and reducing the overall efficiency of the system. Effective bubble evacuation is therefore essential to maintain optimal performance. The integration of flow channels within the electrode structure has been identified as a potential solution to this problem. These channels facilitate the removal of gas bubbles, ensuring that the active sites remain accessible and that the electrochemical reactions proceed without interruption. As the demand for more efficient and reliable electrochemical systems continues to grow, innovations in electrode design and bubble management are becoming increasingly important.

Additionally, these structures can improve the transport of electrolytes, such as KOH in alkaline water electrolyzers, facilitating better ionic conductivity and reaction efficiency.

### SUMMARY

The present invention is directed to a method to enhance bubble evacuation in electrochemical systems by integrating flow channels near and between bubble formation areas in a porous electrode material. The flow channels are engineered into the porous electrode material to facilitate forced electrolyte flow. The flow channels are incorporated as an integral part of the porous electrode structure during manufacturing using either phase separation micro molding or a sacrificial mold. The phase separation micro molding involves using a pre-engineered patterned mold as a casting bed and phase inversion to shape a pattern from a liquid/slurry dope solution used in manufacturing the porous electrode material. The sacrificial mold will be used as a casting bed for the liquid/slurrydope solutions used to manufacture the porous electrode material and will be leached out after applying and formation of the porous electrode material from the liquid/slurry dope solution.

The sacrificial mold, hereinafter also referred to as the sacrificial layer, may be removed from the obtained porous electrode material using an appropriate solvent to create the flow channels in the porous electrode material.

The porous electrode materials comprising the flow channels thus obtained, can be used in electrochemical cells to increase the mass transport property..

Integrating some examples of nanoscale channels, pores, or millimeter-sized channels in the porous electrode materials for bubble evacuation, has a positive effect on the electrochemical activity and performance of the electrodes as;

The flow channels may efficiently remove gas bubbles to prevent blocking of active catalyst sites, asymmetric flow channels found to be the most effective.

The flow channels improve mass transport by managing the presence of gas bubbles to ensure consistent reactant supply and rapid product removal.

The flow channels may mitigate gas crossover risk by effective bubble evacuation to preserve gas purity and system efficiency.

The flow channels can optimize electrode performance by keeping electrodes free from gas bubbles to contribute to system reliability and longevity.

The pre-engineered patterned mold used in the phase separation micro molding may be used as a casting bed to create a patterned electrode with the flow channels.

The phase inversion can be used to shape the pattern from the liquid dope solution to create the patterned electrode with the flow channels based on pattern features of a master mold.

A sacrificial layer may be used to create the desired flow channels in the porous electrode material.

The sacrificial layer can be brought into contact with the liquid dope solution to create the flow channels in the porous electrode material and may be subsequently removed from the structure using an appropriate solvent.

### BRIEF DESCRIPTION OF THE DRAWINGS

FIG. 1 Schematic representation on the integration of flow channels into a porous electrode material.
FIG. 2 (a) schematic drawing of a 2-dimensional structure of a sacrificial layer used in the methods of the invention. (b) schematic drawing of a 3-dimensional structure of a sacrificial layer used in the methods of the invention.

### DETAILED DESCRIPTION

The disclosure provides a method for enhancing bubble evacuation in electrochemical systems by integrating flow channels into porous electrode materials. These flow channels are engineered into the porous electrode materials during the manufacturing process using techniques such as phase separation micro molding or sacrificial molds. The integration of these channels can facilitate forced electrolyte flow, which may improve bubble evacuation efficiency. The flow channels can be strategically positioned proximate to and between regions where bubble formation occurs, thereby preventing the blocking of active catalyst sites and optimizing electrode performance. Additionally, the flow channels may improve mass transport by ensuring a consistent supply of reactants and rapid removal of reaction products, while also mitigating gas crossover risks to preserve gas purity and system efficiency. The use of pre-engineered patterned molds as casting beds or sacrificial layers that are removed with appropriate solvents during the manufacture of the porous electrode materials can create the desired flow channels, contributing to the system's reliability and longevity.

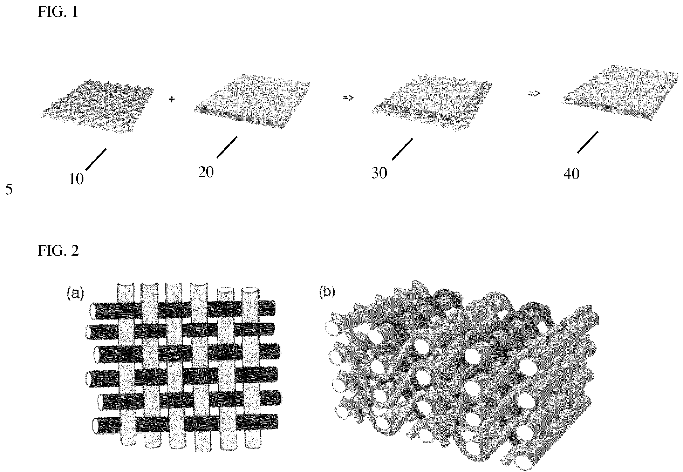

FIG. 1 is illustrating a method for improving bubble evacuation in electrochemical systems through the integration of flow channels, according to an embodiment, wherein the flow channels are created from a mesh of a sacrificial layer (10). This sacrificial layer is brought in contact with a dope solution (20) used in the formation of a porous electrode material. The thus obtained combination (30) of sacrificial layer and dope solution is for example subjected to a phase inversion process wherein the non-solvent used in the phase inversion is also dissolving the sacrificial layer, thereby creating a porous electrode material with integrated flow channels (40). As the positioning of the flow channels is controlled in the process of manufacturing, the integration of flow channels may occur proximate to and between regions where bubble formation is likely to occur within a porous electrode material. These flow channels are engineered into the porous electrode material during its manufacturing process, potentially using techniques such as phase separation micro molding or employing a sacrificial mold. The sacrificial mold may be removed from the structure using an appropriate solvent, thereby creating the desired flow channels within the porous electrode material. The thus obtained porous electrode materials may be utilized in electrochemical cells to increase the electrochemical active surface area, which may be achieved by the integration of nanoscale channels, pores, or millimeter-sized channels within the porous electrode materials, forming asymmetric structures that may effectively evacuate bubbles. The flow channels may efficiently remove gas bubbles, preventing the blocking of active catalyst sites, and improve mass transport by managing the presence of gas bubbles to ensure a consistent reactant supply and rapid product removal. Additionally, the flow channels may mitigate gas crossover risk by effectively evacuating bubbles, thereby preserving gas purity and system efficiency. The optimization of electrode performance may be achieved by keeping electrodes free from gas bubbles, contributing to system reliability and longevity.

For the integration of the flow channels, a pre-engineered patterned mold can be used in a phase separation micro molding process, wherein it serves as a casting bed to create a patterned electrode with the flow channels. Phase inversion is employed to shape the pattern from the liquid dope solution, creating the patterned electrode with the flow channels based on the pattern features of a master mold.

In an alternative approach, the mold is made from a sacrificial layer (Fig. 1), and used to create the desired flow channels in the porous electrode material. The geometry of the desired flow channels will be created by the shape of the sacrificial layer after leaching out this material.

The sacrificial layer can be fabricated with different production methods. A few examples are; woven structures, printed structures, such as (i) screen printing, (ii) single layer print technique (3D-printing), (iii) electrospinning, or a combination of those mentioned production methods or any other technique considered suitable by the skilled person.

Woven structures are typically produced in a loom. This machine interlaces threads or fibers together to form a cohesive structure. Woven materials can have varying levels of complexity.

The two main structures are:
1. 2-dimensional structure: This is the most common type of woven fabric, where threads or fibers are woven together in a flat, planar fashion to create a sheet-like material, like a bedsheet or tablecloth (FIG 2a).
2. 3-dimensional structure: Woven materials can be designed to have a more complex, three-dimensional shape. This can involve weaving techniques that create textures, patterns, or even sculptural elements within the material. Examples include 3D-woven composites used in engineering and advanced textiles with raised patterns or textures (FIG 2b).

The sacrificial layer may be organic and is advantageously one or a combination of: hydroxypropylcellulose (HPC), carboxymethylcellulose (CMC), polyvinyl pyrrolidone (PVP), cross-linked polyvinyl pyrrolidone (PVPP), polyvinyl alcohol (PVA), polyvinyl acetate (PVAc), polyethylene oxide (PEO), polyethylene glycol (PEG), and glycerol. The sacrificial layer, which is usually in the form of a mesh, can already be fully or partially removed by the non-solvent (infra) used in the phase-inversion method applied to the liquid dope solution or can also be removed after the porous matrix is assembled, such as by washing in an aqueous solution (e.g. for PVP). For example, if PVA with a polar non-solvent is used in the phase inversion method, the sacrificial layer will be removed during the phase-inversion method. On the other hand, if PVP is used for the sacrificial, it will have to be removed after the porous matrix is formed in a subsequent washing step using an aqueous solution, in particular using water.

In a preferred embodiment, the sacrificial layer is formed using interlaced wires with a characteristic dimension, either the diameter (for round cross-sections) or the height (i.e. the largest cross-sectional diameter for non-circular cross-sections), ranging from approximately 10 µm to 1750 µm, advantageously from approximately 100 µm to 1000 µm, more advantageously from approximately 50 µm to 600 µm, and even more advantageously from approximately 50 µm to 350 µm. The wires are not limited to a circular cross-section and may be selected from various geometries, including but not limited to round, oval, rectangular, or semi-circular shapes.

In order to create, by means of the sacrificial layer a series of ducts which is the most capable at evacuating gas bubbles that form during electrochemical reactions, and therefore to improve flowability, the sacrificial layer should be present within and have a specific coverage, i.e. percentage of the area of the sacrificial layer wherein the porous electrode material is in contact with the sacrificial layer, from about 10% to about 75%; in particular from about 15% to about 50%; more in particular from about 20% to about 40%; even more in particular from about 25% to about 35%. In this way, when the sacrificial layer is dissolved, the series of ducts connects with the porous electrode material, and evacuation of the gas bubbles that form during electrochemical reactions in the porous electrode through the ducts is achieved with improved flowability.

In each of the foregoing approaches of in situ integrating flow channels in the porous electrode, the manufacturing of the porous electrode material is based on the curing a liquid dope solution, in particular through a phase-inversion method. The phase inversion can be performed by processes known in the art.

A preferred phase inversion process comprises liquid induced phase inversion (LIPS), vapour induced phase inversion (VIPS), or a combination of LIPS and VIPS. The liquid and the vapour, which may be a same or different compound are non-solvents to the polymeric binder material. Hence, during the manufacture of the porous electrodes with integrated flow channels, the liquid dope solution is contacted with a non-solvent (which may be in liquid phase and/or in vapor phase) for the polymeric binder material present in the liquid dope solution as further detailed hereinafter. This creates a demixing of the liquid dope solution in a phase rich of the polymeric binder material and a phase poor of the polymeric binder material. Upon further separation, the solubility of the solvent is further reduced and the polymeric binder material precipitates, thereby obtaining a matrix comprising the polymeric binder material.

Advantageously, the non-solvent comprises or substantially consists of a polar protic solvent. Non-limiting examples of suitable non-solvents for the polymeric binder materials of the invention include water, an alcohol, an acid, or combinations thereof. Particularly preferred non-solvents include water and mixtures of NMP and water, for example having a volume ratio of NMP to water between 0:100 (100% water) and 75:25, for example 50:50.

By preference the porous electrode material is manufactured in accordance with the method and using the materials as disclosed in the examples hereinafter. Briefly, the liquid dope solution, hereinafter also referred to as the slurry, substantially consists of a solvent, a polymeric binder material, particles comprising or substantially consisting of an electrochemically active material and optionally a pore forming agent. Consequently, taking into account the definition and functioning of the optional pore-forming agent, the porous composite electrode produced from such a slurry consists of a porous matrix consisting of the polymeric binder material and the particles comprising or substantially consisting of an electrochemically active material. The particles comprising or substantially consisting of an electrochemically active material are advantageously dispersed in the porous matrix, i.e., in the polymeric binder material.

**In** an embodiment the polymeric binder material comprises or substantially consists of an ion-conductive polymer, also known as an ionomer, or of a non-ion conductive polymer. Non-limiting examples of ion-conductive polymers include Poly(anthraquinonyl sulfide) (PAQS), Perfluorosulfonic acid (PFSA), Poly(3,4-ethylenedioxythiophene) (PEDOT) and copolymers of two or more thereof. Non-limiting examples of non-ion conductive polymers include polysulfone (PSU), polyethersulfone, polyvinylidene fluoride, poly(acrylonitrile), polyethylene-co-vinylalcohol, polycarbonate, polyimide, polyamide, polyamide-imide, polyether imide, polyether ether ketone, cellulose acetate, and copolymers of two or more thereof.

Advantageously, the polymeric binder material comprises or substantially consists of a non-ion conductive polymer. Non-limiting examples of non-ion conductive polymers include polysulfone (PSU), polyethersulfone, polyvinylidene fluoride, poly(acrylonitrile), polyethylene-co-vinylalcohol, polycarbonate, polyimide, polyamide, polyamide-imide, polyether imide, polyether ether ketone, cellulose acetate, and copolymers of two or more thereof.

Advantageously, the slurry comprises between 1 % and 25 % by weight of the polymeric binder material, preferably between 1% and 20 % by weight, based on the total weight of the slurry.

Advantageously, the slurry comprises between 10 % and 98 % by weight of particles comprising or substantially consisting of an electrochemically active metal, preferably between 15 % and 95 % by weight, more preferably between 15 % and 85 % by weight, in particular between 50 % and 95% by weight based on the total weight of the slurry.

The term "electrochemically active metal" or "electrochemically active material" as used herein, is used to refer to the capacity of a material, including, without being limited thereto, a metallic solid, a metal oxide or a metal dichalcogenide, to participate in electrochemical reactions in which electrons are exchanged between chemical substances. The electrochemically active material is thus involved directly in the electrochemical reactions and is, consequently, not inert thereto. In other words, in the present disclosure, an electrochemically active material is different from an electrically conductive compound or additive, which is known to be inert to electrochemical reactions. Advantageously, the slurry and the porous electrode are substantially free from an electrically conductive compound or additive.

Advantageously, the electrochemically active material comprises or substantially consists of an electrochemically active metal selected from the group consisting of nickel, silver, tin, copper, iron, manganese, cobalt, zinc, titanium, bismuth, selenium, and noble metals.

Advantageously, the electrochemically active material, in particular the electrochemically active metal, is present in the particles as one or a combination of a metallic solid, a metal oxide, or a metal dichalcogenide.

Advantageously, the particles have an average particle size between 1 nm and 250 ₁₁m, preferably between 5 nm and 200 ₁₁m, more preferably between 10 nm and 100 ₁₁m. The average particle size can be determined using any a method known to the skilled artisan, including for example laser diffraction or electron microscopy such as Scanning Electron Microscopy (SEM). Laser diffraction is advantageously performed according to standard ASTM B822-20 (2020). Particle size determination by means of SEM comprises calculating the particle sizes from the SEM image(s), advantageously by means of a software application, for example ImageJ, and calculating the average particle size therefrom. In the light of the present disclosure, the particle size of the particles refers to the size of the particles prior to adding them to the slurry, i.e. the so-called starting particles.

Advantageously, when the slurry comprises a pore-forming agent, the slurry comprises up to 10 % by weight of pore forming agent, such as 7.5 % by weight, or 5 % by weight, based on the total weight of the slurry. A particularly preferred pore forming agent is polyvinylpyrrolidone (PVP).

Advantageously, the slurry comprises between 10 % by weight and 68 % by weight of a solvent, preferably between 15 % by weight and 60 % by weight, more preferably between 20 % by weight and 55 % by weight, most preferably between 20 % and 50 % by weight, based on the total weight of the slurry.

Advantageously, the solvent is a non-volatile solvent. With a non-volatile solvent is meant a solvent having a boiling point of at least 150 °C, preferably at least 175 °C, more preferably at least 180 °C at an atmospheric pressure of 1 bar. By using a non-volatile solvent, evaporation of the solvent during the slurry preparation and casting process is avoided. Consequently, the pores are formed during the phase inversion in a controlled way, allowing control of the (average) pore size and the porosity degree of the porous electrode obtained. As a result, the degree of porosity of the obtained porous electrodes is higher than when solvents having lower boiling points, such as boiling points below 100 °C at an atmospheric pressure of 1 bar (i.e. volatile solvents) are used. In said instance, solvent will already evaporate during slurry formation and casting, with an uncontrolled increase in the amount of polymer binder resulting in the formation of a less porous matrix.

Examples of non-volatile solvents include NMP, NEP, acetamide, dimethylsulphoxide (DMSO), formyl piperidine, s-carprolactam, γ-butyrolactone, ethylene carbonate, propylene carbonate, methyl butyl carbonate, methyl isobutyl carbonate, methyl pentyl carbonate, methyl hexyl carbonate, 2-pyrrolidone, N-methylpiperidine, N-ethylpiperidine, N-propylpiperidine, γ-valerolacetone, ε-caprolactone and δ-decalactone.

### EXAMPLES

### Preparation of the sacrificial layer

The sacrificial layer was fabricated using an additive manufacturing approach, employing a 3D printer. A filament of partially hydrolysed Polyvinyl Alcohol (PVA), with a degree of hydrolysis between 86% and 89% and a molecular weight below 50,000 g/mol, was used. This material was selected for its ability to dissolve in water at room temperature. The filament was extruded through a hot-end nozzle at approx. 240°C and deposited onto a Petri dish or any suitable support material, such as a current collector (e.g., nickel foam or nickel mesh). The deposition was carried out in a controlled, parallel-line pattern with a centre-to-centre spacing of 2.6 mm for the first layer. Subsequently, a second layer was deposited in a 90° rotated angle. This secund layer was deposited in the same controlled, parallel-line pattern with a centre-to-centre spacing of 2.6 mm. In this manner, a web-like checkerboard pattern was formed, composed of filaments characterized by a wire diameter of 0.5 mm, a centre-to-centre spacing of 2.6 mm, and a rectangular clear opening size of 2.1 mm. The 3D printed structure resulted in a total thickness of approximately 0.9 mm. This PVA-structure provided a solid material of 15,1 % to the total volume, solid material and void material.

### Preparation of the liquid dope solution.

As an example, the preparation of slurry for preparing an electrode with 95 % wt. Ni (micro)particle is discussed below. It is to be noted that within the context of the present invention the slurry can contain between 50% wt and 98% wt of the metal microparticles.

| | | |
|---|---|---|
| Polymeric Binder | PSU | 1 g |
| Pore Forming Agent | PVP | 1 g |
| Electrochemically Active Material | Ni microparticle (~50 µm) | 19 g |
| Solvent | NMP | 10.5 mL |

In a Thinky mixer container, Polysulfone (PSU, 1 g) and Polyvinylpyrrolidone (PVP, 1g) is dissolved in 5 mL of N-Methyl-2-pyrrolidone (NMP) for 2 mins at 2000 rpm using Thinky mixer.

Nickel (microparticle, about 10 g) is added and mixed for 2 mins at 2000 rpm.

The remaining 9 g Nickel is added and mixed for another 2 mins at 2000 rpm.

5.5 mL NMP is added and mixed for another 2 mins at 2000 rpm and degassed at 900 rpm for 1.5 mins.

### Manufacturing of the electrodes

Specific examples on the manufacture of the electrodes are provided in the numbered examples hereinafter, but in general said method includes the following steps;
o Preparation of sacrificial layer or flow-channel molds
o Preparation of polymer-metal slurry
o Casting of slurry on the sacrificial layer/flow-channel molds, or vice versa. This can be done multiple times in case stacks of electrodes or electrodes with different architecture are desired
o Transferring the prepared film to a coagulation bath, to solidify the product via phase inversion; and
o Removal of remaining solvents, impurities and additives by immersing the electrodes in excess RO (RT or hot) .

### Example 1: Preparation of electrodes with integrated flow channel at the bottom part (EFC 1)

The initial step involves placing a sacrificial layer of specific dimensions onto a petri dish or any appropriate support material such as on top of a current collector, such as Ni foam, or Ni mesh. Next, a prepared slurry is poured over the sacrificial layer until it completely covers it to the desired depth. This can also be prepared by electrospinning, 3D printing, mold-casting.

Subsequently, the resulting film is moved to a coagulation bath that contains a non-solvent, which can either be water alone or a mixture of NMP and water in a different ratio (for example 50:50 ratio), and this is done at room temperature for a duration of 30 minutes. Following this, the electrode that forms is submerged in an excess of purified water (RO water) overnight. The remaining solvent, along with any residual PVP or impurities, is eliminated by subjecting the electrodes to hot water at a temperature of 80 degrees Celsius for a duration of 1 hour. Additional steps for the complete dissolution of the sacrificial layer are currently being explored.

### Example 2: Preparation of electrodes with integrated flow channel at the top part (EFC 2)

The initial step involves pouring or casting the prepared slurry first onto a petri dish or any appropriate support material such as on top of a current collector, such as Ni foam, or Ni mesh, following the placing of the flow channel sacrificial layer. Next, the prepared slurry is also poured over the sacrificial layer until it completely covers it to the desired depth. Alternatively, the flow channel sacrificial layer is inserted into the slurry layer up to a desired depth.

Subsequently, the resulting film is moved to a coagulation bath that contains a non-solvent, which can either be water alone or a mixture of NMP and water in a different ratio (for example 50:50 ratio), and this is done at room temperature for a duration of 30 minutes. Following this, the electrode that forms is submerged in an excess of purified water (RO water) overnight. The remaining solvent, along with any residual PVP or impurities, is eliminated by subjecting the electrodes to hot water at a temperature of 80 degrees Celsius for a duration of 1 hour. Additional steps for the complete dissolution of the sacrificial layer are currently being explored.

### Example 3: Preparation of electrodes with integrated flow channel at both sides of the porous electrode material (EFC 3)

This is a combination of the initial steps of examples 1 and 2. The initial step involves placing a first sacrificial layer of specific dimensions onto a petri dish or any appropriate support material such as on top of a current collector, such as Ni foam, or Ni mesh. Next, a prepared slurry is poured over the first sacrificial layer until it completely covers it to the desired depth. Next, placing a second sacrificial layer of specific dimensions on top of the slurry. Next, the prepared slurry is also poured over the second sacrificial layer until it completely covers it to the desired depth.

Subsequently, the resulting film is moved to a coagulation bath that contains a non-solvent, which can either be water alone or a mixture of NMP and water in a different ratio (for example 50:50 ratio), and this is done at room temperature for a duration of 30 minutes. Following this, the electrode that forms is submerged in an excess of purified water (RO water) overnight. The remaining solvent, along with any residual PVP or impurities, is eliminated by subjecting the electrodes to hot water at a temperature of 80 degrees Celsius for a duration of 1 hour. Additional steps for the complete dissolution of the sacrificial layer are currently being explored.

### Example 4: Preparation of electrodes with integrated flow channel at the bottom part by means of phase separation micro molding (EFC 4)

The initial step involves placing a mold with designed channels/structure as a substrate onto a petri dish or any appropriate support material. Next, a prepared slurry is poured over the sacrificial layer until it completely covers it to the desired depth. This can also be prepared by electrospinning, 3D printing, mold-casting.

Subsequently, the resulting film is moved to a coagulation bath that contains a non-solvent, which can either be water alone or a mixture of NMP and water in a different ratio (for example 50:50 ratio), and this is done at room temperature for a duration of 30 minutes. Following this, the electrode that forms is submerged in an excess of purified water (RO water) overnight, releasing the formed electrode from the mold.

### Example 5: Influence of integrated flow channel structure

Herein sacrificial flowchannels with different shape and structures were used.

List of flowchannels used in this example are summarized in Table 2 below:

| | Descriptions | Thickness (mm) |
|---|---|---|
| EFC 5 | Rectangular | 1.58 |
| EFC 6 | Rectangular | 0.6 |
| EFC 7 | 1D | 0.9 |
| EFC 8 | Electrospun | 0.085 |

Similar to example 1, the initial step involves placing a first sacrificial layer of specific dimensions onto a petri dish or any appropriate support material such as on top of a current collector, such as Ni foam, or Ni mesh. Next, a prepared slurry is poured over the sacrificial layer until it completely covers it to the desired depth.

Subsequently, the resulting film is moved to a coagulation bath that contains a non-solvent, which can either be water alone or a mixture of NMP and water in a different ratio (for example 50:50 ratio), and this is done at room temperature for a duration of 30 minutes. Following this, the electrode that forms is submerged in an excess of purified water (RO water) overnight. The remaining solvent, along with any residual PVP or impurities, is eliminated by subjecting the electrodes to hot water at a temperature of 80 degrees Celsius for a duration of 1 hour. Additional steps for the complete dissolution of the sacrificial layer are currently being explored.

## Claims

1. A method for improving bubble evacuation in electrochemical systems, the method comprising:
integrating flow channels in a porous electrode material, wherein the flow channels are engineered into the porous electrode material and facilitate forced electrolyte flow, **characterized in that** the flow channels are incorporated as an integral part of the porous electrode structure during the manufacturing process of the porous electrode material using at least one of phase separation micro molding or a sacrificial mold, wherein: the phase separation micro molding comprises using a pre-engineered patterned mold as a casting bed and phase inversion to shape a pattern from a liquid dope solution used in the manufacture of the porous electrode material, and wherein the sacrificial mold is used as casting bed for the liquid dope solution used to manufacture the porous electrode material and is leached out after application and formation of the porous electrode material from the liquid dope solution.

2. The method according to claim 1, wherein the sacrificial mold is leached out using an appropriate solvent for said sacrificial mold to create the flow channels in the porous electrode material.

3. The method according to claim 1, wherein the obtained porous electrode materials comprising integrated flow channels are used in electrochemical cells to increase electrochemical active surface area.

4. The method according to claim 1, wherein the pre-engineered patterned mold and sacrificial mold are configured to create at least one of nanoscale channels, pores, or millimeter-sized channels in the porous electrode materials for bubble evacuation.

5. The method according to claim 4, wherein the pre-engineered patterned mold and sacrificial mold are configured to create asymmetric structures in the porous electrode materials to evacuate bubbles effectively.

6. The method according to claim 1, wherein the sacrificial mold has a specific coverage, expressed as the percentage of the area of the sacrificial mold wherein the porous electrode material is in contact with the sacrificial mold, from about 10% to about 75%; in particular from about 15% to about 50%; more in particular from about 20% to about 40%; even more in particular from about 25% to about 35%.

7. The method according to claim 1, wherein the pre-engineered patterned mold used in the phase separation micro molding is used as a casting bed to create a patterned electrode with flow channels ranging in its largest cross-sectional diameter from approximately 10 µm to 1750 µm, and advantageously from approximately 100 µm to 1000 µm.

8. The method according to claim 1, wherein the sacrificial mold used to create the desired flow channels in the porous electrode material, comprises interlaced wires having a diameter (for round cross-sections) or the height (i.e. the largest cross-sectional diameter for non-circular cross-sections), ranging from approximately 10 µm to 1750 µm, and advantageously from approximately 100 µm to 1000 µm..

9. The method according to claim 8, wherein the sacrificial mold is brought into contact with the liquid dope solution to create the flow channels in the porous electrode material and is subsequently removed from the structure using an appropriate solvent for said sacrificial mold.

10. The method of claim 1, wherein the sacrificial mold is made from an organic material selected from one or a combination of: hydroxypropylcellulose (HPC), carboxymethylcellulose (CMC), polyvinyl pyrrolidone (PVP), cross-linked polyvinyl pyrrolidone (PVPP), polyvinyl alcohol (PVA), polyvinyl acetate (PVAc), polyethylene oxide (PEO), polyethylene glycol (PEG), and glycerol.

11. The method according to claim 1, wherein the manufacturing of the porous electrode material is based on the curing a liquid dope solution, in particular through a phase-inversion method.

12. The method according to claim 11, wherein the phase inversion method comprises liquid induced phase inversion (LIPS), vapour induced phase inversion (VIPS), or a combination of LIPS and VIPS.

13. An porous electrode material comprising integrated flow channels obtained using any one of the preceding method claims.

14. Use of the porous electrode material of claim 10, in a membrane electrode assembly.

15. Use of the porous electrode material of claim 10 in an alkaline water electrolyzer.
